# EUROPEAN PATENT APPLICATION

(11) **EP 4 645 204 A1**
(43) Date of publication of application: **05.11.2025**
(21) Application number: 23912002.5
(22) Date of filing: 22.12.2023
(51) Int. Cl.: G06Q 50/10, G06Q 10/20, G06Q 30/02

(54) **INFORMATION PRESENTATION DEVICE, INFORMATION PRESENTATION METHOD, AND INFORMATION PRESENTATION PROGRAM**

(30) Priority: 28.12.2022 JP 2022212577
(71) Applicant: Broadleaf Co., Ltd., Tokyo 140-0002 (JP)
(72) Inventor: SOKEI Ryota, Tokyo 140-0002 (JP); TANIGUCHI Yuichiro, Tokyo 140-0002 (JP); OISHI Kenji, Tokyo 140-0002 (JP); MURAKAMI Shogo, Tokyo 140-0002 (JP)
(74) Representative: Grünecker Patent- und Rechtsanwälte PartG mbB
(86) International application number: PCT/JP2023/046249
(87) International publication number: WO 2024/143222

(57) **Abstract**

An information presentation device (1) stores parts information of moving bodies and repair information of parts. The information presentation device (1) identifies damage information of the parts of a damaged moving body on the basis of structural information of the moving body and the parts information, and calculates repair costs for the parts of the moving body and purchase costs on the basis of the damage information and repair information. The information presentation device (1) then presents moving body-related information including the repair costs and the purchase costs. At this time, a purchase cost calculation unit calculates a first purchase cost for purchasing the moving body on the basis of the repair costs and a second purchase cost for purchasing the moving body on the basis of the reuse values of the parts. An information presentation unit presents moving body-related information including both a purchase cost, which takes into consideration the calculation results of the first purchase cost and the second purchase cost, and the repair costs.

## Description

### TECHNICAL FIELD

The present invention relates to an information presentation device, an information presentation method, and an information presentation program. In particular, the present invention relates to an information presentation device, an information presentation method, and an information presentation program that present moving body-related information related to a moving body.

### BACKGROUND ART

In the related art, when a moving body (for example, a vehicle) is damaged, the damaged moving body is carried into a repair shop and a damaged portion is repaired. At this time, estimates of a repair cost and a repair period are calculated, and an owner of the vehicle checks the estimates and determines whether to request repair.

Under such circumstances, there has been proposed a technique capable of determining a damaged component including an internal damage of a damaged vehicle and presenting an estimate of a repair cost (for example, see Patent Literature 1).

There is a case where the owner of the damaged vehicle confirms the estimate of the repair cost and does not request the repair because the repair cost is high and the repair period is long. In this case, the owner continues to use the vehicle or sells the vehicle.

Under such circumstances, there has been proposed a technique capable of presenting an estimate of a purchase cost based on vehicle information related to a vehicle when an owner wants to sell the vehicle (for example, see Patent Literature 2).

### CITATION LIST

### PATENT LITERATURE

Patent Literature 1: JP2004-177191A
Patent Literature 2: JP2022-84129A

### SUMMARY OF INVENTION

### TECHNICAL PROBLEM

Incidentally, the damaged vehicle as described above is subjected to processing such as repair, purchase, and scrapping according to an intention of the owner of the vehicle. The processing is determined in consideration of not only a degree of attachment to the damaged vehicle but also the cost required for the processing. The request for the estimate of each cost is made by a business capable of handing the processing, but there is a possibility that an appropriate handling method for the damaged vehicle is not necessarily presented to the owner of the vehicle.

On the other hand, it is difficult for a repair-purchase business to grasp the handling after the vehicle purchase, and it is difficult to grasp an appropriate handling method and prepare an estimate.

An object of the present invention is to provide an information presentation device, an information presentation method, and an information presentation program capable of presenting, to a user, information capable of determining a more appropriate handling method for a moving body than before.

### SOLUTION TO PROBLEM

According to an aspect of the present invention, there is provided an information presentation device including: a component information storage unit configured to store component information related to a component constituting a moving body; a repair information storage unit configured to store repair information related to repair of the component; a structure information acquisition unit configured to acquire structure information of a predetermined moving body; a damage specifying unit configured to specify damage information of the component constituting the moving body based on the structure information and the component information of the component constituting the moving body stored by the component information storage unit; a repair cost calculation unit configured to calculate a repair cost required for repairing the component constituting the moving body based on the damage information of the component specified by the damage specifying unit and the repair information stored by the repair information storage unit; a purchase cost calculation unit configured to calculate a purchase cost required for purchase of the moving body; an information presentation unit configured to present moving body-related information including the repair cost calculated by the repair cost calculation unit and the purchase cost calculated by the purchase cost calculation unit, in which the purchase cost calculation unit calculates a first purchase cost related to purchase of the moving body based on the repair cost and a second purchase cost related to purchase of the moving body based on a reuse value of the component constituting the moving body, and the information presentation unit presents the moving body-related information including the purchase cost of the moving body in consideration of calculation results of the first purchase cost and the second purchase cost and the repair cost.

As described above, the information presentation device (the information presentation unit) presents the moving body-related information including the "purchase cost" of the moving body in consideration of the calculation results of the "first purchase cost" based on the repair cost and the "second purchase cost" based on the reuse value of the component and the "repair cost".

By doing so, an estimate of the "repair cost" and an estimate of the "purchase cost" based on the repair cost are presented, and the user can determine an appropriate handling method for the moving body.

According to an aspect of the present invention, there is provided an information presentation method executed by a computer including a component information storage unit configured to store component information related to a component constituting a moving body, and a repair information storage unit configured to store repair information related to repair of the component, the information presentation method including: a damage specifying step of specifying damage information of the component constituting the moving body based on structure information of a predetermined moving body and the component information of the component constituting the moving body stored by the component information storage unit; a repair cost calculation step of calculating a repair cost required for repairing the component constituting the moving body based on the damage information of the component and the repair information stored by the repair information storage unit; a purchase cost calculation step of calculating a purchase cost required for purchase of the moving body; and an information presentation step of presenting moving body-related information including the repair cost and the purchase cost, in which
in the purchase cost calculation step, a first purchase cost related to purchase of the moving body based on the repair cost and a second purchase cost related to the purchase of the moving body based on a reuse value of the component constituting the moving body are calculated, and
in the information presentation step, the moving body-related information including the purchase cost of the moving body in consideration of calculation results of the first purchase cost and the second purchase cost and the repair cost is presented.

According to an aspect of the present invention, there is provided an information presentation program causing a computer as an information presentation device including a component information storage unit configured to store component information related to a component constituting a moving body, and a repair information storage unit configured to store repair information related to repair of the component to execute the following processing: damage specifying processing of specifying damage information of the component constituting the moving body based on structure information of a predetermined moving body and the component information of the component constituting the moving body stored by the component information storage unit; repair cost calculation processing of calculating a repair cost required for repairing the component constituting the moving body based on the damage information of the component and the repair information stored by the repair information storage unit; purchase cost calculation processing of calculating a purchase cost required for purchase of the moving body; and information presentation processing of presenting moving body-related information including the repair cost and the purchase cost, in which in the purchase cost calculation processing, a first purchase cost related to purchase of the moving body based on the repair cost and a second purchase cost related to the purchase of the moving body based on a reuse value of the component constituting the moving body are calculated, and in the information presentation processing, the moving body-related information including the purchase cost of the moving body in consideration of calculation results of the first purchase cost and the second purchase cost and the repair cost is presented.

### ADVANTAGEOUS EFFECTS OF INVENTION

According to the information presentation device, the information presentation method, and the information presentation program of the present invention, it is possible to present, to a user, information capable of determining a more appropriate handling method for a moving body than in the related art.

In particular, it is possible to present the moving body-related information including an estimate of the "repair cost" and an estimate of the "purchase cost" based on the repair cost to the user and determine an appropriate handling method for the moving body.

### BRIEF DESCRIPTION OF DRAWINGS

[FIG. 1] FIG. 1 is a configuration diagram of an entire information presentation system according to the present embodiment.
[FIG. 2] FIG. 2 is a diagram illustrating hardware configurations of an information presentation device, a first user terminal, and a second user terminal.
[FIG. 3] FIG. 3 is a diagram illustrating functions of the information presentation device, the first user terminal, and the second user terminal.
[FIG. 4] FIG. 4 is a diagram illustrating a type information (vehicle inspection certificate information) input screen.
[FIG. 5] FIG. 5 is a diagram illustrating a type information (vehicle registration number) input screen.
[FIG. 6] FIG. 6 is a diagram illustrating a component analysis screen.
[FIG. 7] FIG. 7 is a diagram illustrating a component analysis screen (an analysis result).
[FIG. 8] FIG. 8 is a diagram illustrating a component analysis screen (the analysis result).
[FIG. 9A] FIG. 9A is a diagram illustrating details of estimate results illustrated in FIG. 8.
[FIG. 9B] FIG. 9B is a diagram illustrating the details of the estimate results illustrated in FIG. 8.
[FIG. 10] FIG. 10 is a diagram illustrating a VIEWER screen (a 3D model screen).
[FIG. 11] FIG. 11 is a diagram illustrating a VIEWER screen (a 2D model screen).
[FIG. 12] FIG. 12 is a diagram illustrating a cost transition graph screen (similarity 100%).
[FIG. 13] FIG. 13 is a diagram illustrating the cost transition graph screen (similarity 80%).
[FIG. 14] FIG. 14 is a diagram illustrating a component selection screen.
[FIG. 15] FIG. 15 is a diagram illustrating a work selection screen.
[FIG. 16] FIG. 16 is a processing flowchart illustrating an example of an information presentation method.

### DESCRIPTION OF EMBODIMENTS

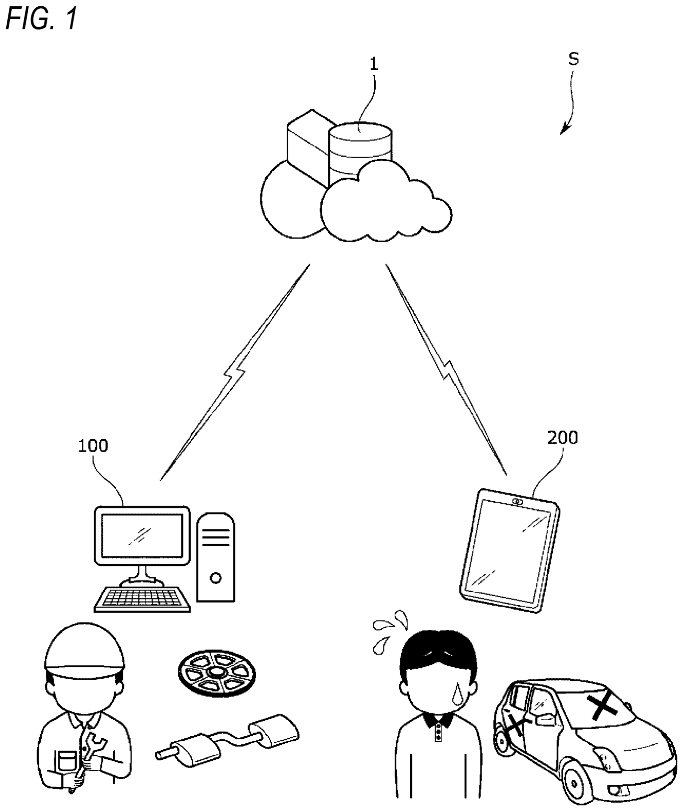

Hereinafter, an embodiment of the present invention will be described with reference to FIGS. 1 to 16.

### <Overview of Information Presentation System>

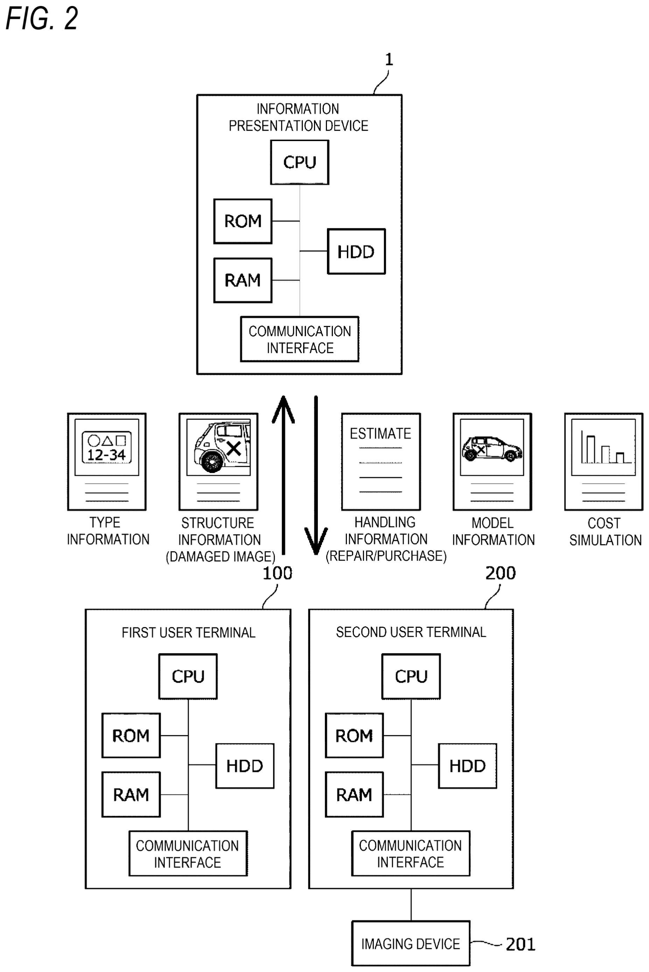

As illustrated in FIGS. 1 and 2, an information presentation system S mainly includes an information presentation device 1, a first user terminal 100, and a second user terminal 200. The information presentation device 1 presents "moving body-related information" related to a "moving body". The first user terminal 100 is connected to the information presentation device 1 through a network, is used by a "first user", and receives presentation of the moving body-related information. The second user terminal 200 is used by a "second user" and receives presentation of the moving body-related information.

Here, the "moving body" corresponds to a vehicle, and in the present embodiment, corresponds to a "damaged vehicle". The "moving body" is completed by assembling a plurality of components constituting the moving body, and can also be referred to as a moving body component group (a vehicle component group) in terms of use value of moving body components. The "moving body" is not limited to the vehicle, and may be a vehicle other than a vehicle (one that carries people) or one that carries things other than people. The "moving body" may be a drone or a small mobility vehicle.

The "moving body-related information" is information related to the moving body and corresponds to information transmitted to a person related to the moving body. In the present embodiment, the "moving body-related information" includes "handling information" for the damaged vehicle, and corresponds to information presented to a related user of the moving body. The "handling information" is a "repair cost", a "purchase cost", and other "costs related to processing" for the damaged vehicle. The handling information may include list information of repair components and replacement components required for the damaged vehicle.

The "first user" is, for example, a business (a repair business, a customization business, a purchase business, or a repair-purchase business) involved in repair, customization, or purchase of the moving body. That is, the "first user" is a business (an undertaker, a requestee) who undertakes the after-service of the vehicle (damaged vehicle) and exchanges with the owner of the vehicle. In the present embodiment, the "first user" is a repair-purchase business involved in repair and purchase of the moving body.

The "second user" is a requester who requests the first user, and is, for example, an owner of the moving body or a person related to the owner. The "second user" may be a driver who drives the moving body instead of the owner. That is, the "second user" is a person who receives the after-service of the vehicle (damaged vehicle) and exchanges with the business. In the present embodiment, the "second user" is an owner of the moving body.

The information presentation device 1 includes, as a database (DB), a moving body information storage unit 11 that stores "moving body information" related to a moving body, a component information storage unit 12 that stores "component information" related to the components constituting the moving body, and a repair information storage unit 13 that stores "repair information" related to repair of the component.

The information presentation device 1 identifies a user who uses a terminal such as the first user terminal 100 or the second user terminal 200. Then, the information presentation device 1 acquires "type information (the vehicle inspection certificate information or a number plate)" of the damaged moving body from the first user terminal 100 or the second user terminal 200 identified by the user, and specifies the "type" of the moving body. In addition, the information presentation device 1 acquires "structure information" of the damaged moving body and specifies "damage information (a scratch, a recess, or the like)" of the components constituting the moving body. Then, the information presentation device 1 calculates the "repair cost" and the "purchase cost" of the moving body based on the type of the moving body and the damage information of the component of the moving body, and presents the repair cost and the purchase cost to the first user terminal 100 or the second user terminal 200 as "handling information for the damaged moving body".

The information presentation device 1 may include a database (a provision database) that manages the "moving body information", the "component information", the "repair information", and the like, or may acquire latest information from an external management server that manages the "moving body information", the "component information", the "repair information", and the like at any time and temporarily store the latest information.

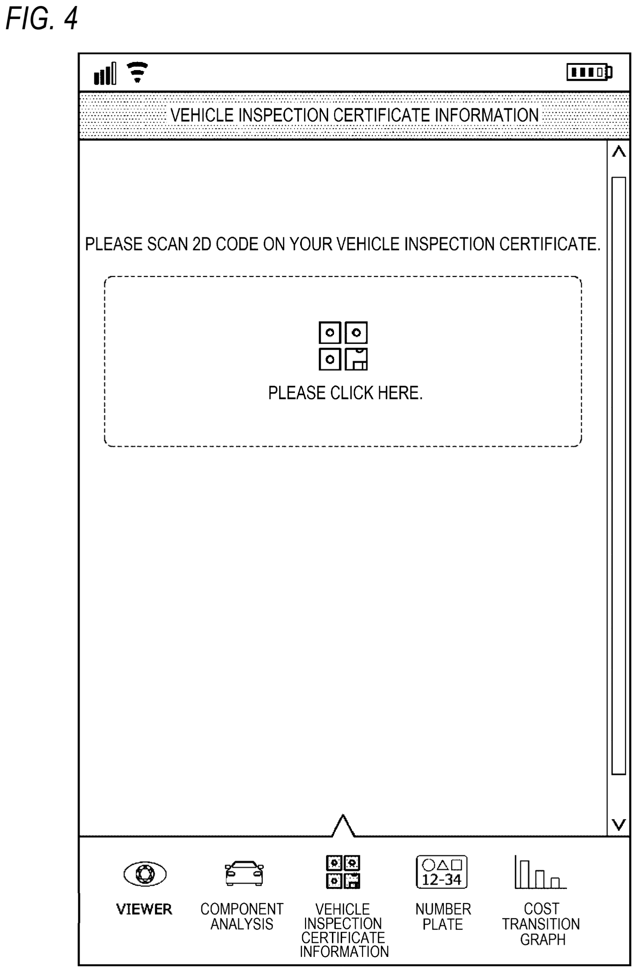

The information presentation device 1 provides a dedicated software (application) related to an information presentation program, and provides software services (application services) related to the information presentation program as illustrated in FIGS. 4 to 15 to the first user terminal 100 or the second user terminal 200 in which the software is installed.

Specifically, the information presentation device 1 acquires information on the damaged moving body from the first user terminal 100 of the second user terminal 200, and presents (displays or reports) information on a handling method for the damaged moving body (for example, comparison information on the repair cost and the purchase cost). As a result, the first user or the second user can determine the optimal handling method for the damaged moving body in consideration of the information on the handling method. By presenting the "comparison information of the repair cost and the purchase cost", the first user or the second user can compare an "estimate of the repair cost" with an "estimate of the purchase cost in consideration of the repair cost", and can determine to request repair, purchase, scrapping, and the like as an optimal handling method.

The first user terminal 100 (the first user terminal) is an information terminal (a business terminal) used by a business (the repair-purchase business), and is specifically a computer such as a PC.

The first user terminal 100 is connected to the information presentation device 1 and receives a software services from the information presentation device 1. Further, the first user terminal 100 is connected to the second user terminal 200, and can receive the structure information (a damage image) of the damaged moving body from the second user terminal 200.

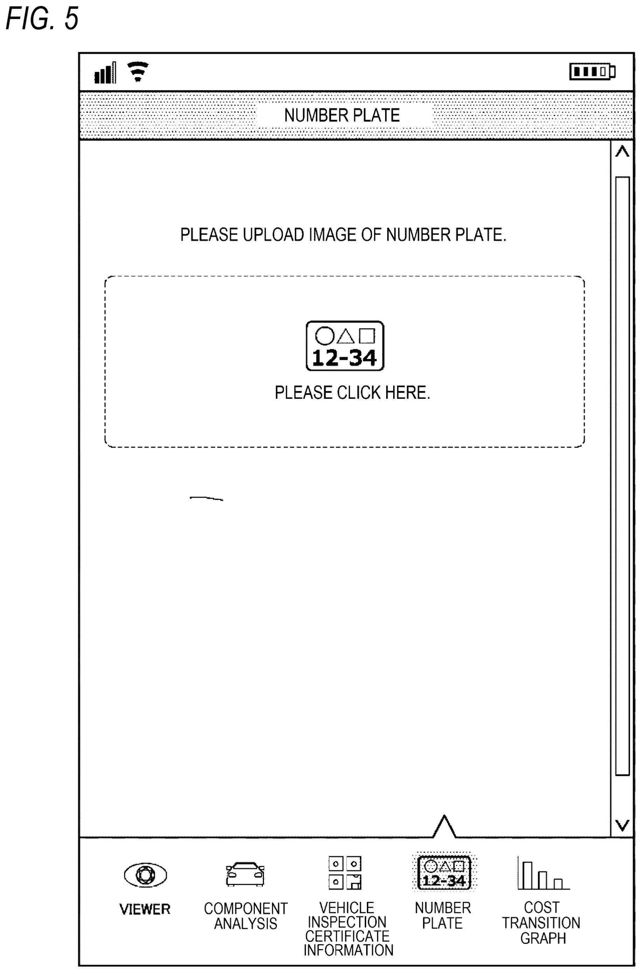

For example, the first user terminal 100 receives an input of the "type information (the vehicle inspection certificate information)" by a user operation on a display screen (a type information input screen) illustrated in FIG. 4, and registers the type information of the damaged moving body (transmits the type information). Alternatively, the first user terminal 100 receives an input of the "type information the (vehicle registration number)" by the user operation on the display screen (the type information input screen) illustrated in FIG. 5, and registers the type information of the damaged moving body. In the above example, the first user terminal 100 receives the "type information" as an example, but is not particularly limited. For example, the first user terminal 100 may receive the "information on the owner" of the moving body. In this case, the information presentation device 1 can specify the type information of the vehicle by referring to the handling information between "owner information" and the "information on the moving body owned by the owner" stored in the moving body information storage unit 11.

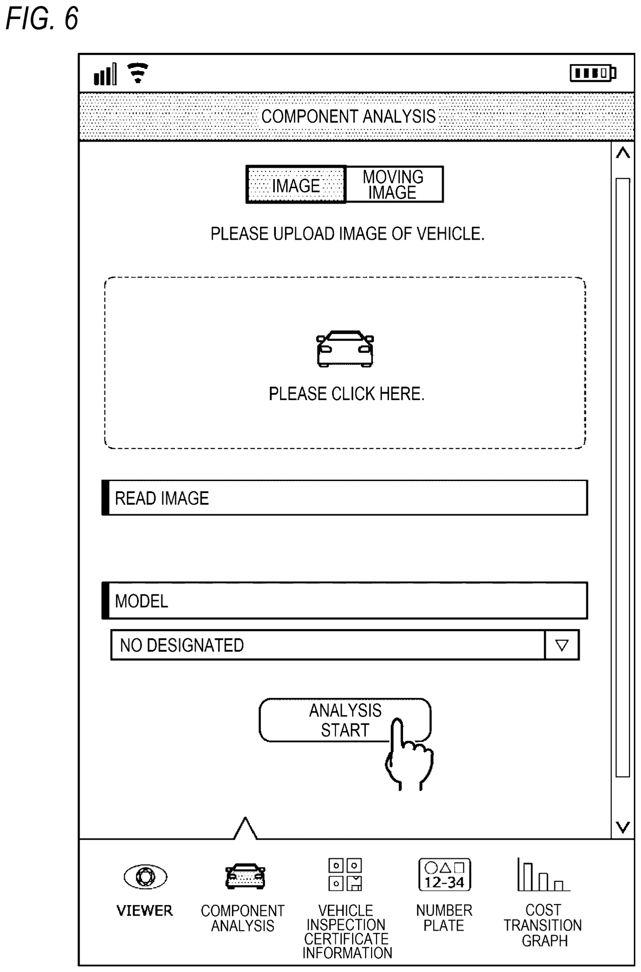

In addition, the first user terminal 100 receives an input of the "structure information of the damaged moving body (the damage image of the moving body)" by the user operation on the display screen (a component analysis screen) illustrated in FIG. 6, and registers the structure information of the moving body (transmits the structure information). At this time, the first user terminal 100 may receive the input of a plurality of damage images. That is, the first user terminal 100 may receive an input of a damage image captured from a different direction for a damaged portion of the moving body. In addition, the first user terminal 100 may receive an input of identification information (supplementary information) for identifying damage information of components.

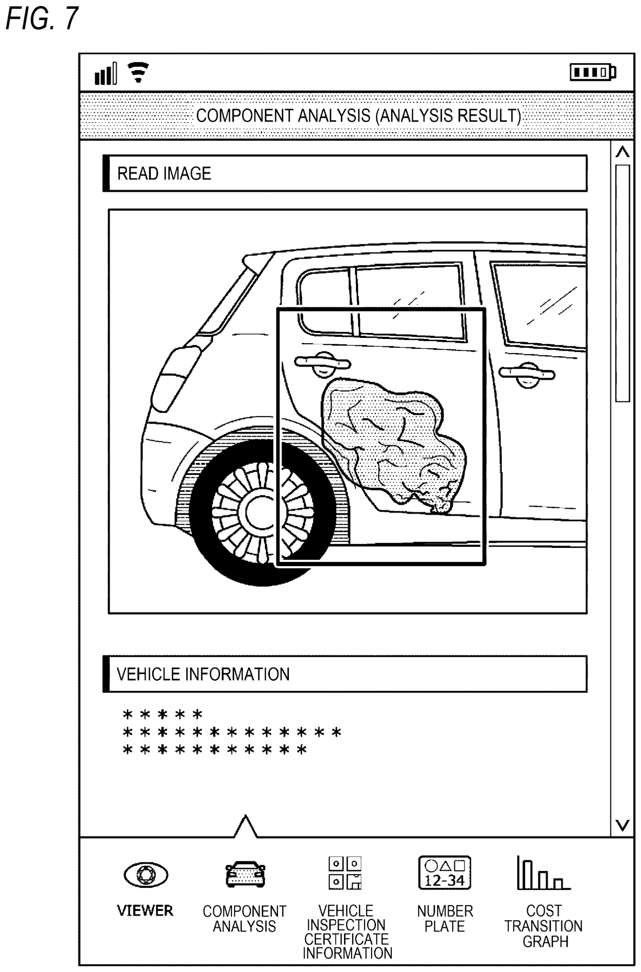

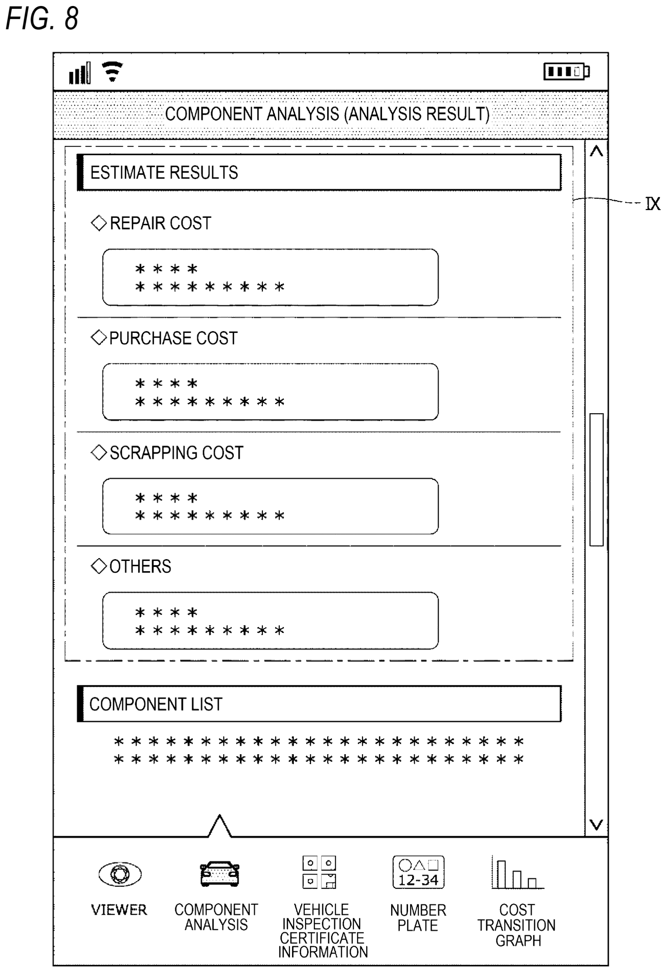

In a state where the type information and the structure information of the moving body are registered, the first user terminal 100 receives execution of the "component analysis" by the user operation on the component analysis screen illustrated in FIG. 6, thereby requesting handling information (the moving body-related information) for the registered moving body. Then, the first user terminal 100 acquires the handling information including the "repair cost" and the "purchase cost" for the moving body from the information presentation device 1, and displays the handling information (vehicle information, an estimate result, a component list, and the like) on the component analysis result screen illustrated in FIGS. 7 and 8. Specifically, the first user terminal 100 displays the component list required for repair and replacement in addition to the "repair cost", the "purchase cost", and a "scrapping cost".

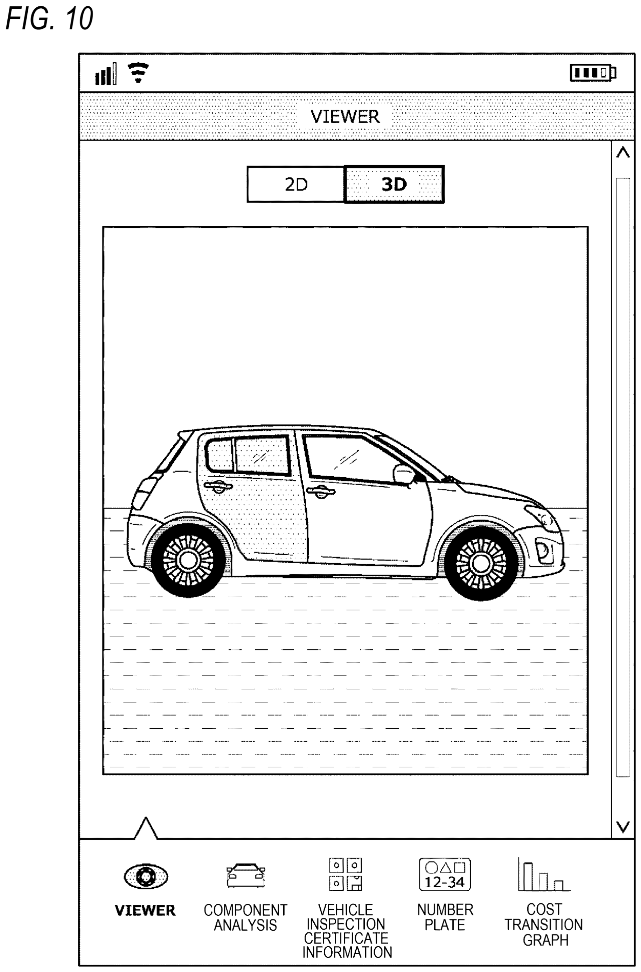

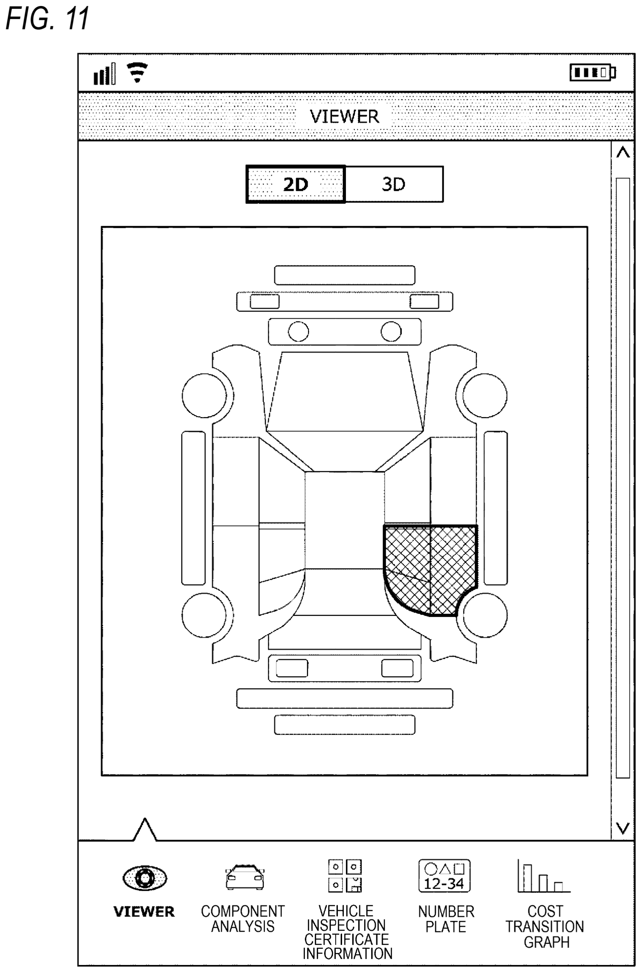

In addition, the first user terminal 100 acquires the moving body information (model information) on the moving body from the information presentation device 1, and displays the model information on a "VIEWER screen" illustrated in FIGS. 10 and 11. This model information is, for example, 3D model information (a three-dimensional view) or 2D model information (a developed view) of the moving body, and a location of the damaged component (the damaged portion) may be highlighted.

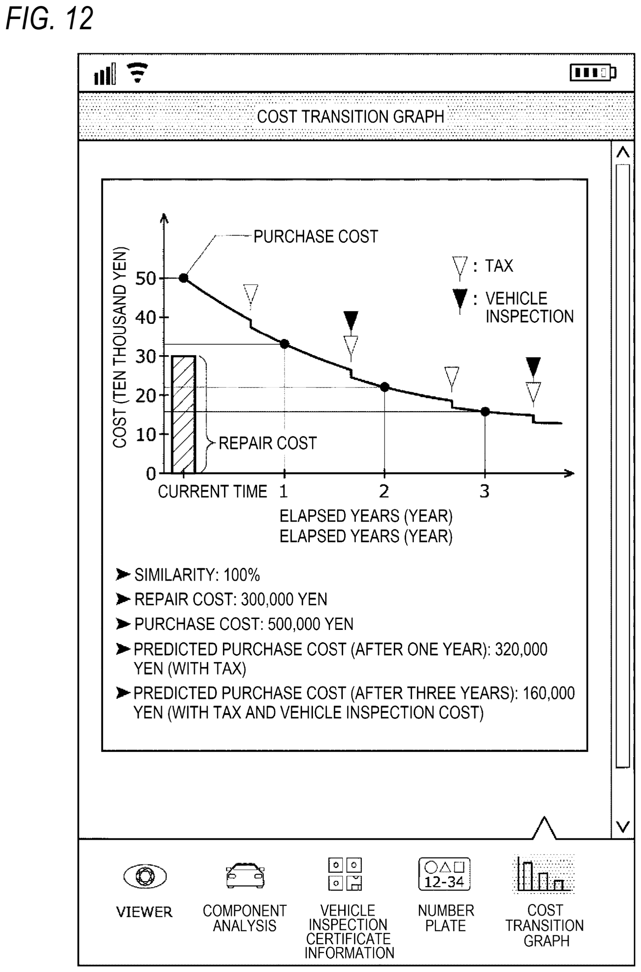

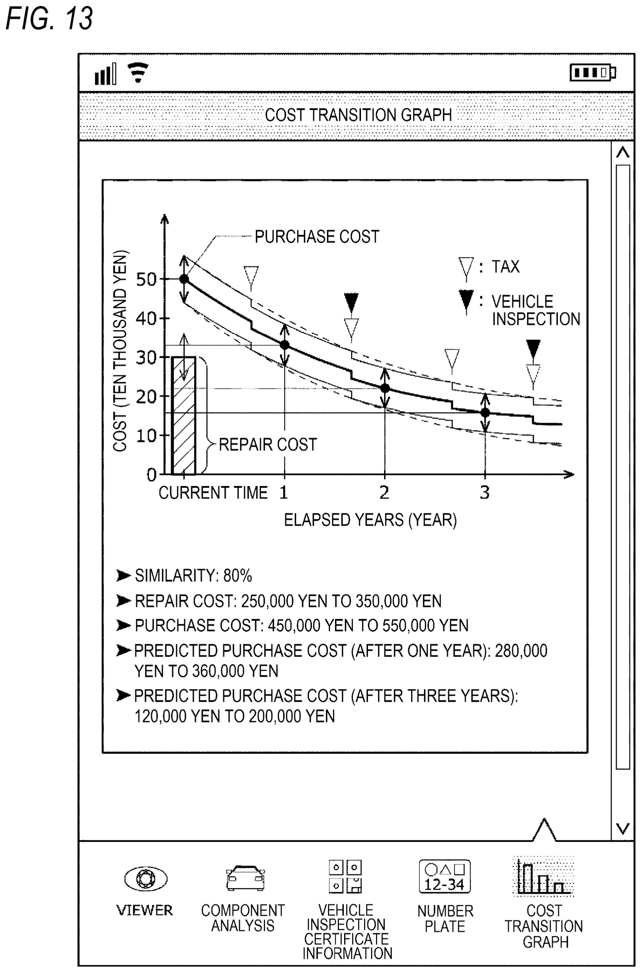

In addition, the first user terminal 100 can compare and display the "repair cost", the "purchase cost", a "predicted purchase cost", and "time-series transition graph of these costs" of the moving body on a "cost transition graph screen" illustrated in FIGS. 12 and 13. Details of the "cost transition graph screen" will be described later.

The second user terminal 200 (the second user terminal) is an information terminal used by the owner of the moving body, and is specifically a computer (an owner terminal) such as a tablet terminal or a smartphone equipped with an imaging device.

The second user terminal 200 may be equipped with an imaging device 201 (a camera with a depth sensor) having a depth sensor. By using the depth sensor, the depth (distance) to an object can be measured, and the depth information can be visualized in the captured image.

The second user terminal 200 is connected to the information presentation device 1 and the first user terminal 100, and receives a software service from the information presentation device 1.

The second user terminal 200 is provided with the same software service as the first user terminal 100. However, the display screen displayed on the second user terminal 200 is partially different from the display screen displayed on the first user terminal 100. The moving body-related information presented to the second user terminal 200 is information partially different from the moving body-related information presented to the first user terminal 100.

Specifically, the moving body-related information presented from the information presentation device 1 to the first user terminal 100 is information for a business (the repair-purchase business) that is an undertaker who undertakes a moving body (the vehicle). In addition, the information presentation device 1 presents the display screen for a business.

On the other hand, the moving body-related information presented from the information presentation device 1 to the second user terminal 200 is information for the owner of the moving body. The information presentation device 1 presents the display screen for the owner.

That is, the information presentation device 1 may be rephrased as presenting "first moving body-related information" and a "first display screen" required for a repair and purchase work of a moving body to the first user terminal 100, and presenting "second moving body-related information" and a "second display screen" required for owning a moving body to the second user terminal 200.

For example, the information presentation device 1 can provide the first user terminal 100 with repair information required for repairing a moving body and market price information required for purchase. Furthermore, the information presentation device 1 can provide a plurality of patterns of "purchase costs", including a "first purchase cost" considering the reuse value of the moving body and a "second purchase cost" considering the reuse value of the component of the moving body. Based on these pieces of information, the business (the first user terminal 100) provides the purchase cost designated by the business to the owner (the second user terminal 200) of the moving body.

The second user terminal 200 acquires the handling information based on the "purchase cost" and the "repair cost" of the moving body designated by the business. For example, unlike the first user terminal 100, the information presentation device 1 may not provide the second user terminal 200 with the plurality of patterns of the purchase costs. That is, the owner can acquire information (only necessary information) required for determining the handling method for the damaged moving body.

With the information presentation system S described above, it is possible to present an appropriate handling method for the moving body (the damaged moving body) to the first user (the repair-purchase business of the moving body) and the second user (the owner of the moving body).

Specifically, the information presentation system S can present the moving body-related information including the "repair cost" and the "purchase cost" based on the repair cost to the first user and the second user and determine an appropriate handling method for the moving body. In particular, a "first purchase cost" based on the reuse value of the moving body and the repair cost of the moving body and a "second purchase cost" based on the reuse value of the component of the moving body and the scrapping cost of the moving body can be presented to the first user as the information for the business.

### <Hardware Configuration of Information Presentation System>

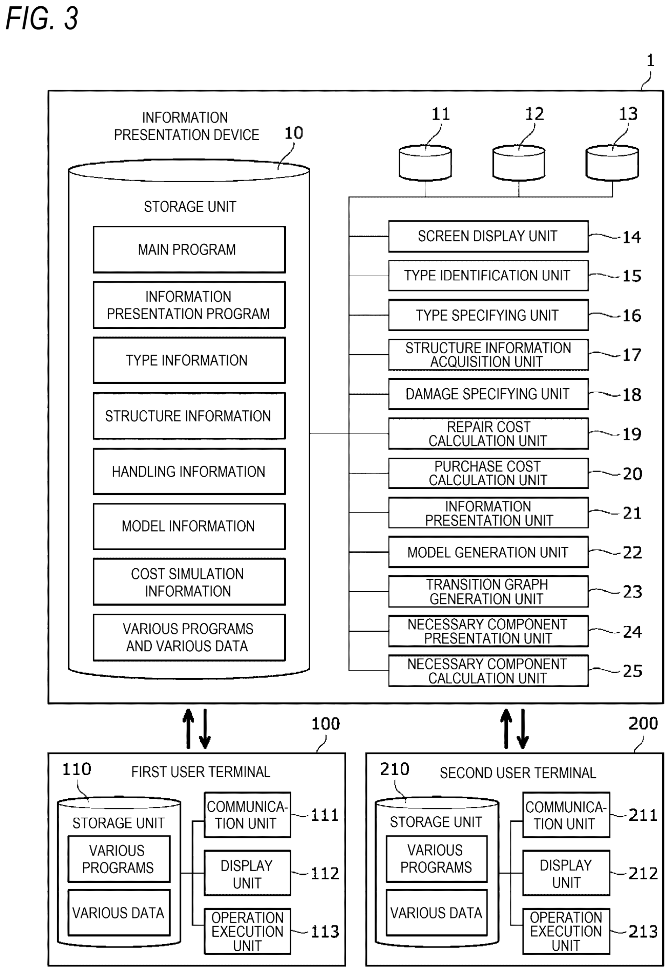

As illustrated in FIGS. 2 and 3, the information presentation device 1 is a computer equipped with a CPU as a data calculation and control processing device, ROM, RAM, and HDD (SSD) as storage devices, and a communication IF for transmitting and receiving information data via the Internet.

The storage device of the information presentation device 1 stores an information presentation program in addition to a main program that functions as a computer. When these programs are executed by the CPU (processor), the functions of the information presentation device 1 are exhibited. Alternatively, these programs may be executed by a semiconductor integrated circuit in which the CPU is mounted or a field-programmable gate array (FPGA).

The first user terminal 100 and the second user terminal 200 are also computers having the same hardware configuration as the information presentation device 1.

The second user terminal 200 includes the imaging device 201. The second user terminal 200 can capture an image of a damaged moving body (component of the moving body) using the imaging device 201 and acquire a "damage image of the moving body".

The imaging device 201 may be an imaging camera having a depth sensor, but is not particularly limited thereto, and may be an imaging device having no depth sensor. The imaging device 201 may be a 3D imaging camera, but may be a 2D imaging camera.

### <Functions of Information Presentation System>

As illustrated in FIG. 3, from a functional standpoint, the information presentation device 1 includes, as main components, a storage unit 10 that stores various programs and various data such as the "type information", the "structure information", the "handling information", the "model information", and "cost simulation information", a moving body information storage unit 11, a component information storage unit 12, a repair information storage unit 13, a screen display unit 14, a type identification unit 15, a type specifying unit 16, a structure information acquisition unit 17, a damage specifying unit 18, a repair cost calculation unit 19, a purchase cost calculation unit 20, an information presentation unit 21, a model generation unit 22, a transition graph generation unit 23, a necessary component presentation unit 24, and a necessary work presentation unit 25.

These components are implemented by a CPU, a ROM, a RAM, an HDD, a communication interface, various programs, and the like.

The "moving body-related information" described above includes the "handling information", the "model information", and the "cost simulation information".

As illustrated in FIG. 3, from a functional standpoint, the first user terminal 100 and the second user terminal 200 also include, as main components, storage units 110 and 210 that both store various programs and various types of data, communication units 111 and 211 that transmit and receive various types of data to and from the information presentation device 1, display units 112 and 212 that display service contents related to moving body-related information presented by the information presentation device 1 on a screen, and operation execution units 113 and 213 that both receive an input of the user operation and execute operation processing.

Hereinafter, functions of the information presentation device 1 will be described in detail. First, various types of information (data) stored in the storage unit 10 will be described.

### <<Various Information (Data)>>

As illustrated in FIGS. 2, 4, and 5, the "type information (type data)" is transmitted from the first user terminal 100 or the second user terminal 200 to the information presentation device 1.

The "type information" includes "first type information" for identifying the type of the moving body and "second type information" for estimating the type of the moving body.

The "first type information" is information that can identify the type of the moving body with an accuracy of 100% (estimate with similarity of 100%). Specifically, the first type information is the vehicle inspection certificate information (moving body certification information), a vehicle registration number (a moving body registration number), a VIN code (an individual identification number), or the like. The vehicle registration number is a number described on the number plate.

The "second type information" is information for identifying the type of the moving body with a lower accuracy than the "first type information", and identifies the type of the moving body with an accuracy of, for example, 1% to 99%. The "second type information" is also information that can estimate the type of the moving body based on the similarity (probability) to the moving body identified by the "first type information". Specifically, the second type information is information such as a vehicle type name, a vehicle name, a vehicle body shape, and a vehicle category. In addition, the second type information may include information such as a model year and a grade.

The "vehicle type" is a type classified according to the application of the vehicle. Examples of the vehicle type include an ordinary passenger car, a small truck, and a light four-wheeled passenger car.

The "vehicle body shape" is a type classified by a vehicle model (body type). Examples of the vehicle body shape include a box shape, an awning shape, and a station wagon.

Examples of the "vehicle category" include compact, sedan, wagon, truck, and sports.

The "similarity" is also referred to as a vehicle specifying accuracy error, and may be represented by an error (difference) from the similarity of 100%. For example, a moving body estimated with a similarity of 80% is represented with an error of 20% (a difference between 100% and 80%) when represented with the vehicle specifying accuracy error.

For example, if there is "information on a vehicle type" of the moving body, the type of the moving body can be estimated with a similarity of 80%. In addition, if there are both "information on a vehicle type" and "information on a model year", the type of the moving body can be estimated with a similarity of 85% (80% + 5% = 85%). If there are "information on a vehicle type", "information on a model year", and "information on a grade", the type of the moving body can be estimated with a similarity of 90%.

Note that the similarity may be calculated by a deduction item (an item that decreases the similarity) such as the vehicle type, the vehicle name, the vehicle body shape, or the vehicle category, and a point addition item (an item that increases the similarity) such as the model year or the grade.

As illustrated in FIGS. 2 and 6, the "structure information" is transmitted from the first user terminal 100 or the second user terminal 200 to the information presentation device 1.

The "structure information" is data for specifying a structure of a moving body (a component of the moving body), and is specifically image data (damage image data) of the moving body. The image of the moving body may be an image obtained by capturing an image of a damaged portion of the moving body and a periphery of the damaged portion.

Further, the structure information may be an image of one moving body, but is preferably a plurality of images captured from different directions with respect to the damaged portion of the moving body.

The image of the moving body may be used not only as the structure information but also as type information for identifying the type of the moving body. The vehicle inspection certificate information and the vehicle registration number may be used not only as the type information but also as the structure information.

As illustrated in FIGS. 2, 7, and 8, the "handling information" is transmitted from the information presentation device 1 to the first user terminal 100 or the second user terminal 200, and is information for the first user or the second user to consider a handling method for the damaged moving body.

The "handling information" includes the "vehicle information", the "repair cost", the "purchase cost", the "scrapping cost", "cost related to other processing", and a "repair-replacement component list" for the damaged moving body.

The "purchase cost" includes the "first purchase cost" related to the purchase of the moving body based on the repair cost and the "second purchase cost" related to the purchase of the moving body based on the reuse value of the component of the moving body. That is, the "first purchase cost" is a purchase cost based on the reuse value of a "used moving body" after repairing the damaged moving body. On the other hand, the "second purchase cost" is a purchase cost based on the reuse value of a "used component" after disassembling the damaged moving body. The "second purchase cost" may be a purchase cost when the moving body is purchased as an aggregate of components (a component group).

The "repair-replacement component list" is a list of components that need to be repaired or replaced among the component group of the damaged moving body. The component list includes information such as a component code, a component name, and a classification (repair, replacement, inspection, and the like) for each component.

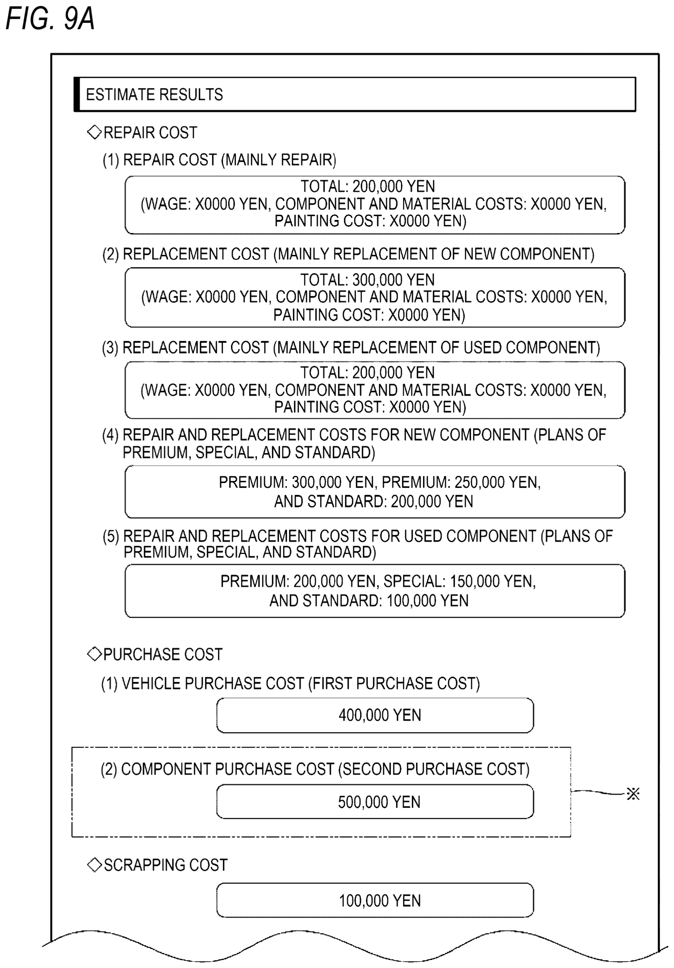

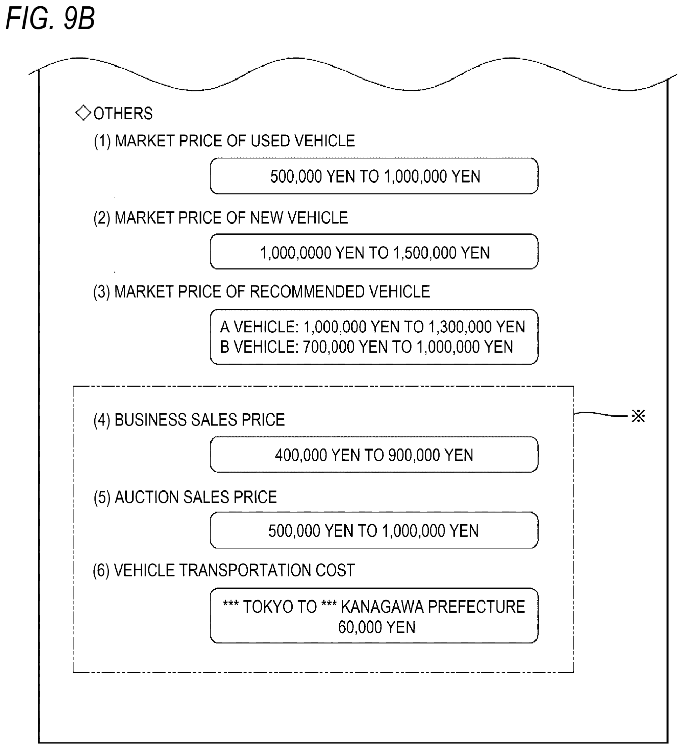

Details of the "repair cost", the "purchase cost", and the "scrapping cost" illustrated in FIG. 8 are as illustrated in FIGS. 9A and 9B. Details of the "repair cost", the "purchase cost", and the "scrapping cost" will be described later.

As illustrated in FIGS. 2, 10, and 11, the "model information" is information transmitted from the information presentation device 1 to the first user terminal 100 or the second user terminal 200, and is information for generating a 3D model (the three-dimensional view) or a 2D model (the developed view) of the damaged moving body.

The "model information" includes information on the damaged moving body and information on components constituting the moving body. Based on the model information, it is also possible to generate a disassembly model (components disassembly model) in which the moving body is disassembled into component groups.

The "model information" also includes information on a damaged portion (the damaged component) of the moving body. Based on this model information, the damaged portion of the 3D model (2D model) of the moving body can be represented in a different display mode.

The information on a damaged portion includes information on a size of the scratch, a shape of the scratch, and a depth of the scratch for each component in addition to the type of the damaged component.

As illustrated in FIGS. 2, 12, and 13, the "cost simulation information" is information transmitted from the information presentation device 1 to the first user terminal 100 or the second user terminal 200, and is information for generating cost transition information (a cost transition graph) required for handling the damaged moving body.

The "cost simulation information" includes current time repair cost and purchase cost, a future predicted purchase cost, a future expenditure information, the market price information, and the like. The cost transition graphs illustrated in FIGS. 12 and 13 can be generated based on the cost simulation information.

The future expenditure information is, for example, a tax (an automobile tax, a weight tax, or the like) required for maintaining the moving body, an inspection cost (a vehicle inspection cost) required for inspecting the moving body, an insurance cost of the moving body, or the like.

The future market price information includes a market price of a used moving body related to the moving body, a market price of a used component related to a component of the moving body, and the like.

Next, the "moving body information" stored in the moving body information storage unit 11 (a moving body information database), the "component information" stored in the component information storage unit 12 (a component information database), and the "repair information" stored in the repair information storage unit 13 (a repair information database) will be described.

The "moving body information" is identification information (specific information) related to the moving body, and includes, for example, identification information such as the vehicle inspection certificate information, the vehicle registration number, the VIN code, the vehicle type name, the vehicle name, the vehicle body shape, the vehicle body dimension, the vehicle category, the model, the model year, the grade, an exhaust amount, and fuel for each moving body (vehicle).

The "moving body information" includes a vehicle image for each moving body, general maintenance information, information on a component group, and information on a maintenance cost. In addition, the "moving body information" may include a vehicle image, maintenance history information, component group information (a component state or the like), and a travel distance for each predetermined moving body.

By referring to the "moving body information", the information presentation device 1 can identify the type of the moving body. In addition, by referring to the "moving body information", the information presentation device 1 can also determine the damaged portion (damaged component) of the moving body and specify the damaged portion.

The "component information" is identification information (specific information) related to components of a moving body, and includes, for example, information on a component group for each moving body (vehicle), and identification information such as a component code, a component name, a component shape, a component dimension, a component model year, a component grade, and a component image for each component.

By referring to the "component information", the information presentation device 1 can identify the components constituting the moving body. Further, by referring to the "component information", the information presentation device 1 can also determine the damaged component of the moving body and specify the damaged component.

The "repair information" is information on repair and replacement of a component, and includes, for example, information (work information) required for repair and replacement of each component. The information required for repair and replacement of a component is, for example, information on work contents (a work procedure) such as a repair work, a replacement work, and an inspection work, a work index, a work wage, and a component cost.

By referring to the "repair information", the information presentation device 1 can specify work contents required for the repair and replacement of the damaged component of the moving body, and calculate a work wage and a component cost required for the work.

The moving body information storage unit 11 also stores the "market price information of a moving body", "future expenditure information of the moving body", and "sales condition information". The component information storage unit 12 also stores "market price information of a component" and "sales condition information".

The "market price information of a moving body" is market prices of a used moving body and a new moving body, and includes the future market price (for example, the market price after three years) in addition to the current time market price.

The "market price information of a component" is market prices of a used component and a new component, and includes a future market price in addition to the current time market price.

As described above, the "future expenditure information" is the tax required for maintaining the vehicle, the inspection cost required for inspecting the vehicle, the insurance cost of the vehicle, and the like.

The "sales condition information" includes information such as an image, a component state, a price (new product price, sales price), a quantity, quality, a shipping fee, and a travel distance of the vehicle (the vehicle component).

### <<Display Screen Layout>>

The screen display unit 14 outputs the service content related to information presentation of the moving body to the display screen of the first user terminal 100 or the second user terminal 200.

Specifically, the first user terminal 100 or the second user terminal 200 accesses a dedicated website (application) managed by the information presentation device 1 and logs in as a user, thereby displaying the service content related to information presentation on the display screen.

After the user login by the first user or the second user, the screen display unit 14 transitions the screen by receiving a selection of a desired user operation in a state where a top screen (not illustrated) is displayed, and displays the display screens illustrated in FIGS. 4 to 14.

FIGS. 4 and 5 illustrate screens for inputting the type information of the moving body. Specifically, FIG. 4 illustrates a vehicle inspection certificate information input screen, and FIG. 5 illustrates a vehicle registration number (number plate) input screen.

Although FIG. 4 illustrates an example in which a camera is activated to read a two-dimensional code described in a vehicle inspection certificate, a document of the vehicle inspection certificate (or a vehicle inspection certificate card or a vehicle inspection certificate storage medium) itself may be read using the camera. The type information can be acquired by performing character recognition from the document by OCR or the like.

As another example, an integrated circuit (IC) reader may be activated to read a chip (IC tag) attached to the vehicle inspection certificate, and the type information may be acquired from the IC chip. The IC reader at this time may be provided by a vehicle inspection certificate browsing application linked with the information presentation program.

FIG. 6 illustrates a component analysis screen and an input screen for receiving information for analyzing the state of the vehicle by a user operation.

At this time, in addition to the input of an image related to the vehicle (the moving body), the camera (the imaging device) is activated, an input of a screen of the vehicle captured by the camera is performed, and analysis of components constituting the vehicle is performed from the image. At this time, the presence or absence of a failure, the specification of a failure location, and a degree of failure (a failure depth) may be identified using the depth sensor.

As illustrated in FIGS. 4 to 6, the specification of the type information and the component analysis are performed on separate screens, but the specification of the type information, the component analysis, and the determination of the failure location and degree may be performed based on a single image (the image related to the vehicle) on one display screen.

FIG. 7 and FIG. 8 illustrate component analysis screens, and specifically illustrate screens of analysis results after execution of component analysis by a user operation.

The analysis screen (analysis result) illustrated in FIG. 7 displays the "damage image of the moving body" acquired from the first user terminal 100 or the second user terminal 200 and the "vehicle information" indicating the type of the moving body.

On the analysis screen (an analysis result) illustrated in FIG. 8, the repair cost, the purchase cost, and the scrapping cost are displayed as the "estimate results", and a "component list" required for repair and replacement is displayed. The information on the estimate results and the component list corresponds to the "handling information". The analysis screen illustrated in FIG. 8 may be either display screen of the display screens displayed on the first user terminal 100 and the second user terminal 200.

Here, details of the "estimate results" will be described with reference to FIGS. 9A and 9B.

Actually, information on the estimate results illustrated in FIGS. 9A and 9B is displayed in a list in an item field of the estimate result on the analysis screen (the analysis result) illustrated in FIG. 8.

FIG. 9A and FIG. 9B are information on the estimate results displayed on the analysis screen of the first user terminal 100 used by the repair-purchase business, and are estimate information for the business.

FIG. 9A illustrates details of the "repair cost", the "purchase cost", and the "scrapping cost".

The "repair cost" indicates a total of five patterns of repair costs (replacement costs). Specifically, there are (1) a repair cost when mainly performing body repair, (2) a replacement cost when mainly performing replacement of a new component, (3) a replacement cost when mainly performing replacement of a used component, (4) a replacement cost when performing the body repair and replacement of a new component, and (5) a replacement cost when performing the body repair and replacement of a used component. The repair costs for (4) and (5) are further divided into plans of premium (gold), special (silver), and standard (bronze).

The "purchase cost" indicates a total of two patterns of purchase costs. Specifically, there are (1) a vehicle purchase cost (the first purchase cost) based on the reuse value of the vehicle, and (2) a component purchase cost (the second purchase cost) based on the reuse value of the component.

The "scrapping cost" is a cost required when the vehicle is performed scrapping.

FIG. 9B illustrates details of related information of "others".

"Others" indicates a total of six pieces of related information. Specifically, there are (1) a market price of a used vehicle having a vehicle type, class, and grade similar to those of the damaged vehicle, (2) a market price of a new vehicle having a vehicle type, class, and grade similar to those of the damaged vehicle, and (3) a market price of a recommended used vehicle having a vehicle type, class, and grade similar to those of the damaged vehicle. In addition, there are (4) a business sales price of the damaged vehicle, (5) an auction price of the damaged vehicle, and (6) a transportation cost of the damaged vehicle.

Based on the information on the estimate results, the repair-purchase business can present, for example, "vehicle purchase cost (the first purchase cost)" among two patterns of the purchase costs to an owner of the moving body, and can present to buy the moving body for 400,000 yen when purchasing it.

In addition, the repair-purchase business can also present to the owner of the moving body that the vehicle is purchased for 500,000 yen by adding 100,000 yen to the "vehicle purchase cost (the first purchase cost)" with reference to the related information (the market price information) of "others". That is, the repair-purchase business can determine the purchase cost by placing importance on the profit or the market price information. In addition, the repair cost can be proposed.

FIGS. 9A and 9B are the information on the estimate results displayed on the analysis screen of the first user terminal 100, and are partially different from information on the estimate results displayed on the analysis screen of the second user terminal 200 used by the owner.

On the analysis screen of the first user terminal 100, all information on the estimate results illustrated in FIGS. 9A and 9B can be displayed, and predetermined information can be displayed or hidden by customization. In particular, in FIG. 9A, purchase costs of both the "first purchase cost" and the "second purchase cost" are displayed as items of the purchase cost. In a case where these purchase costs are set, a possibility that the vehicle can be reused (resold) as a vehicle and a possibility that the component can be reused as a component are illustrated to the repair-purchase business.

On the other hand, the analysis screen of the second user terminal 200 is designed not to display the information surrounded by a broken-line frame among the information on the estimate results illustrated in FIGS. 9A and 9B (see " 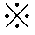 " mark illustrated in FIGS. 9A and 9B).

The hidden information includes the "second purchase cost" illustrated in FIG. 9A, the "business sales price", an "auction sales price", and a "vehicle transportation cost" illustrated in FIG. 9B. The "first purchase cost" is displayed on the analysis screen of the second user terminal 200. That is, the "first purchase cost" is displayed as the "purchase cost" on the analysis screen of the second user terminal 200. The "purchase cost" merely indicates to the owner that the vehicle is being taken away from his/her possession (relinquish the ownership), and does not ask whether the purchase cost is a cost for reusing (reselling) the vehicle or a cost for reusing the component.

That is, in the display of the purchase cost illustrated in FIGS. 9A and 9B, the purchase cost of a target moving body (vehicle) is calculated and displayed, but the meaning of the displayed purchase cost is different depending on the display screen (the analysis screen of the first user terminal 100 or the analysis screen of the second user terminal 200) displaying the purchase cost.

The "first purchase cost" is a cost based on the reuse value for reusing (reselling) a purchased vehicle as a vehicle, and transfer of ownership or the like is performed. However, the "first purchase cost" does not include the cost related to the transfer or the like. Of course, the cost related to the transfer or the like may be separately stored, and the cost including the information on the cost may be displayed as the "first purchase cost". The "second purchase cost" is a cost based on the reuse value for reusing a purchased vehicle as a component, and does not include a cost related to a scrapping procedure. Of course, the cost related to the scrapping procedure may be separately stored, and the cost including the information on the cost may be displayed as the "second purchase cost".

As described above, the display screen of the first user terminal 100 and the display screen of the second user terminal 200 are partially different from each other in the information on the handling method (estimate results) presented to the user. This indicates that an item corresponding to a user (the repair-purchase business, the owner) who displays the estimate result is displayed, and an optimum estimate display can be performed according to the user.

FIG. 10 illustrates the VIEWER screen (a 3D model screen), and FIG. 11 illustrates the VIEWER screen (a 2D model screen). Specifically, in FIG. 10, the 3D model information (the three-dimensional view) of the damaged moving body is displayed, and in FIG. 11, the 2D model information (the developed view) of the damaged moving body is displayed. In both FIGS. 10 and 11, the location of the damaged component of the moving body (the damaged portion) is highlighted.

FIG. 12 illustrates the cost transition graph screen (similarity 100%), and FIG. 13 illustrates the cost transition graph screen (similarity 80%). In FIG. 12, current time and future cost transition information (cost transition graphs) of the moving body when the damaged moving body is estimated with the similarity of 100% is displayed. In addition, in FIG. 13, current time and future cost transition information of the moving body when the damaged moving body is estimated with the similarity of 80% is displayed.

In the case of FIG. 13, since the moving body is estimated with the similarity of 80%, an error corresponding to the difference 20% occurs in the cost transition information. That is, the information on the error of the "repair cost", the error of the "purchase cost" at the current time, and the error of the future "predicted purchase cost" is displayed together.

### <<Specifying Type>>

The type identification unit 15 acquires the type information of the damaged moving body and identifies the type of the moving body based on the "type information" and the "moving body information" of the moving body managed by the moving body information storage unit 11.

The type identification unit 15 may identify the moving body based on the "structure information (the damage image)" and the "moving body information" instead of the "type information".

Specifically, the type identification unit 15 acquires the "vehicle inspection certificate information (the first type information)" through the vehicle inspection certificate information input screen illustrated in FIG. 4. Specifically, the type identification unit 15 acquires the "vehicle inspection certificate information" by reading the vehicle inspection certificate card two-dimensional code based on the user operation.

Alternatively, the type identification unit 15 acquires the "vehicle registration number (the first type information)" through the vehicle registration number input screen illustrated in FIG. 5. Specifically, the type identification unit 15 acquires the "vehicle registration number" by reading the image data of the number plate based on the user operation.

When the first type information is obtained, the type identification unit 15 can identify the type of the vehicle (can identify the type with the similarity of 100%).

On the other hand, when the first type information is not obtained, the type identification unit 15 can acquire the second type information such as the vehicle type, the vehicle name, and the vehicle body shape through a type information acquisition screen (not illustrated).

When the second type information is obtained, the type identification unit 15 estimates the type of the moving body according to an identification degree (reliability) of the acquired second type information.

The type identification unit 15 can acquire the "type information" from the first user terminal 100 used by the repair-purchase business in addition to the case of acquiring the "type information" from the second user terminal 200 used by the owner of the moving body.

In the latter pattern, a case may be considered in which, after the second user terminal 200 transmits the "type information" of the moving body to the first user terminal 100, the first user terminal 100 may transmit the "type information" to the information presentation device 1 instead.

When the type identification unit 15 acquires the "first type information" and identifies the type of the moving body, the type specifying unit 16 specifies the type of the moving body based on the identification result. In other words, the type specifying unit 16 specifies the type of the moving body with the similarity of 100%.

On the other hand, when the type identification unit 15 cannot acquire the "first type information" and cannot identify the type of the moving body, the type specifying unit 16 specifies the type of the moving body and the "similarity" of the type.

Specifically, when the type identification unit 15 acquires the "second type information", the type identification unit 15 estimates the type of the moving body based on the "second type information" and the "moving body information". Then, the type specifying unit 16 specifies the estimated type of the moving body and the "similarity" of the moving body.

The reliability of the "second type information" is as described above. For example, when the second type information is "information on the vehicle type", the type specifying unit 16 specifies the type of the moving body with the similarity of 80%.

When the type of the moving body is not specified by the similarity of 100%, the estimate information and the cost transition information are affected. A component list required for repair and replacement is information in a predicted range.

### <<Specifying Damaged Portion (Damaged Component)>>

The structure information acquisition unit 17 acquires the structure information of the moving body measured using the depth sensor.

Specifically, the structure information acquisition unit 17 acquires the "damage image data" of the moving body captured by the imaging device 201 from the second user terminal 200.

Specifically, the structure information acquisition unit 17 acquires the "damage image data" through the component analysis screen illustrated in FIG. 6. That is, the structure information acquisition unit 17 acquires the damage image data by reading the damage image data based on the user operation.

The "damage image data" is data including depth information obtained by measuring the depth to the object by the depth sensor. By using the damage image data, the determination of the damaged portion can be performed with a high accuracy.

The structure information acquisition unit 17 may acquire the "structure information" from the first user terminal 100 in addition to acquiring the "structure information" from the second user terminal 200.

The damage specifying unit 18 specifies the "damage information of a component" based on the "structure information" and the "component information" stored by the component information storage unit 12.

Specifically, based on the "structure information (the damage image data)" and the "component information", the damage specifying unit 18 compares the component of the damaged moving body with a normal component corresponding to the damaged component, and specifies the "damage information of a component".

The damage specifying unit 18 may compare the damaged moving body with a normal moving body based on the "structure information" and the "moving body information" to specify the "damage information of a component". Alternatively, the damage specifying unit 18 may specify the "damage information of a component" based only on the "structure information".

Specifically, as illustrated in FIG. 7, the damage specifying unit 18 identifies a component having a scratch or a recess from the "damage image", determines a scratch level or a recess level, and specifies the damage information (a degree of damage) from the determination result. As a method of determining the scratch level or the recess level, (1) a method of determining the scratch level (a size of the scratch, a shape of the scratch, a depth of the scratch) based on depth information by the depth sensor (also referred to as scoring determination using AI) is adopted. Alternatively, as the method of determining the scratch level or the recess level, (2) a method of determining the scratch level (the size of the scratch, the shape of the scratch, and the depth of the scratch) by comparing the damaged component with a normal product with reference to the component information stored in the component information storage unit 12 may be adopted.

By performing both of these determination methods, the damage specifying unit 18 can specify the "damage information of a component" with a higher accuracy. Then, the information presentation device 1 can prepare an estimate with a high accuracy.

### <<Presentation of Handling Information>>

The repair cost calculation unit 19 calculates the "repair cost" required for repairing the component of the moving body based on the "damage information of a component" specified by the damage specifying unit 18 and the "repair information" stored in the repair information storage unit 13.

The repair cost calculation unit 19 can calculate the repair cost with a higher accuracy by referring to the type of the moving body specified by the type specifying unit 16 in addition to the "damage information of a component" and the "repair information". That is, the repair cost calculation unit 19 can clearly identify the size of the scratch, the shape of the scratch, and the depth of the scratch by specifying the type of the moving body, and calculate the "repair cost" required for repair and replacement of the damaged component in a state where the damaged component is specified.

The repair cost calculation unit 19 may calculate the "repair cost" of the moving body by further referring to the "moving body information" stored in the moving body information storage unit 11.

The "moving body information" includes the maintenance history information for each predetermined moving body.

The repair cost calculation unit 19 refers to the "maintenance history information (the damage state information)" of the moving body to grasp the past damage state of the moving body, and then calculates (adjusts) the "repair cost" required for repair and replacement of the damaged portion (the damaged component) this time.

In this way, the repair cost calculation unit 19 can calculate the repair cost with the higher accuracy.

The repair cost calculation unit 19 may calculate the "repair cost" of the moving body by further referring to an "index in the estimate of the damaged vehicle". The index refers to a standard numerical value based on a certain standard work when repair and replacement wages of the damaged vehicle are calculated.

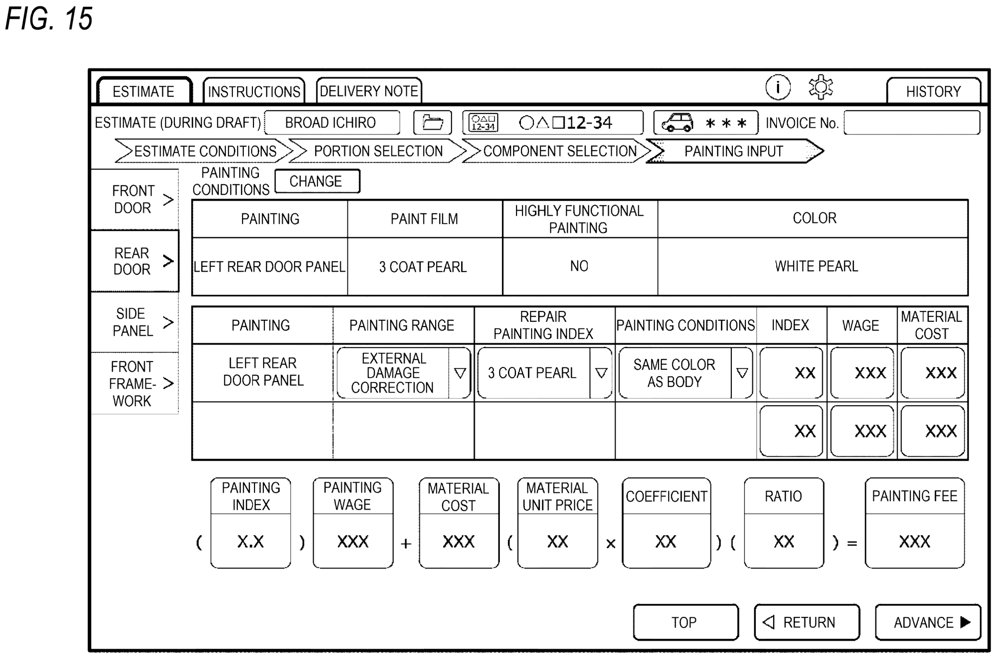

For example, the calculation of the "repair wage" is obtained by the product of a "work time (index)" and a "repair unit price per hour" as illustrated in FIG. 15.

The purchase cost calculation unit 20 calculates the "first purchase cost" related to the purchase of the moving body based on the repair cost of the moving body and the "second purchase cost" related to the purchase of the moving body based on the reuse value of the component of the moving body.

Specifically, the purchase cost calculation unit 20 calculates the "first purchase cost" based on the "reuse value (resale value) of the moving body" and the "repair cost" of the moving body with reference to the "market price information (market price) of the moving body" stored in the moving body information storage unit 11. Of course, when the repair cost is unnecessary, the purchase cost calculation unit 20 calculates the "first purchase cost" based on the "reuse value (resale value) of the moving body".

In addition, the purchase cost calculation unit 20 calculates the "second purchase cost" based on the "reuse value of the component" and the "scrapping cost of the moving body" with reference to the "market price information (market price) of the component" stored in the component information storage unit 12. Of course, when the scrapping cost is unnecessary, the purchase cost calculation unit 20 calculates the "second purchase cost" based on the "reuse value of the component".

The "first purchase cost" is a purchase cost based on the reuse value of the "used moving body" after the damaged moving body is repaired. The "first purchase cost" is, for example, a purchase cost calculated based on the used market price of the damaged moving body, the calculated repair cost, and the damage information used to calculate the repair cost. In a case where the "first purchase cost" is calculated on the display screen displayed to the repair-purchase business or the display screen displayed to the owner (for example, FIGS. 9A and 9B), the purchase cost may be obtained by adding information of a predetermined profit rate of a person who reuses the moving body to the purchase cost based on the reuse value of the moving body.

On the other hand, the "second purchase cost" is the purchase cost based on the reuse value of the "used component" after disassembling the damaged moving body. The "second purchase cost" is, for example, a purchase cost that is calculated in consideration of the values of a component group, the component group being obtained (taken from components) from the damaged moving body, based on information such as the type of the moving body suitable for the component group, a component configuration, and a component purchase price. When the "second purchase cost" is calculated on the screen (for example, FIGS. 9A and 9B) in the repair-purchase business, the purchase cost may be obtained by adding information on a predetermined profit rate of the person who reuses the component to the purchase cost based on the reuse value of the component.

The information presentation unit 21 presents the "handling information (the moving body-related information)" including the "repair cost" calculated by the repair cost calculation unit 19 and the "purchase cost" calculated by the purchase cost calculation unit 20.

Specifically, the information presentation unit 21 presents the purchase cost of the moving body in consideration of the calculation results of the "first purchase cost" and the "second purchase cost" as the "purchase cost".

Specifically, the information presentation unit 21 presents the "handling information" of the damaged moving body through the component analysis screen (the analysis result) illustrated in FIGS. 7 and 8.

As illustrated in FIGS. 7 and 8, the "handling information" includes the "vehicle information", the "repair cost", the "purchase cost", the "scrapping cost", the "cost related to other processing", and the "repair-replacement component list" for the damaged moving body.

As illustrated in FIGS. 7 and 8, the information presentation unit 21 outputs, to the first user terminal 100 used by the repair-purchase business, the handling information including the "purchase cost (a purchase cost for a business)" including the "first purchase cost" and the "second purchase cost" of the moving body and the "repair cost (a repair cost for a business)".

On the other hand, the information presentation unit 21 outputs, to the second user terminal 200 used by the person (owner) who has transmitted the structure information of the moving body, the handling information including the "purchase cost (a purchase cost for an owner)" in consideration of the purchase cost designated by the user operation of the business (the first user) among the "first purchase cost" and the "second purchase cost" and the "repair cost (a repair cost for an owner)" in consideration of the repair cost.

The specific differences are as follows.

FIGS. 9A and 9B are diagrams illustrating details of the "estimate result" on the component analysis screen (the analysis result) illustrated in FIG. 8, and illustrate estimate results (estimate comparison results) presented to the first user terminal 100.

As illustrated in FIGS. 9A and 9B, the information presentation unit 21 presents a total of five patterns of the "repair cost", a total of two patterns of the "purchase cost" and the "scrapping cost", and a total of six pieces of "related information" to the first user terminal 100. Specifically, the related information includes (1) a market price of a used vehicle, (2) a market price of a new vehicle, (3) a market price of a recommended used vehicle, (4) a business sales price of the damaged vehicle, (5) an auction price of the damaged vehicle, and (6) a transportation cost of the damaged vehicle.

In addition, additional information or various costs when it is assumed that the owner continues to ride on the moving body may be presented as the information on the "estimate result" presented to the business. Specifically, examples of the information include a repair period of the moving body, current time and future insurance costs of the moving body, and the tax.

On the other hand, the estimate result presented to the second user terminal 200 is different from the estimate result presented to the first user terminal 100.

Specifically, the second user terminal 200 is designed not to display information surrounded by a broken-line frame among the information of the estimate result illustrated in FIGS. 9A and 9B (see the " 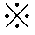 " mark illustrated in FIGS. 9A and 9B).

Specifically, the second user terminal 200 displays one pattern of purchase cost (for example, the first purchase cost) designated by the repair-purchase business. In addition, (4) the business sales price, (5) the auction price, and (6) the transportation cost of "others" are not displayed on the second user terminal 200.

As the information on the "estimate result" presented to the owner, the repair period of the moving body, the current time and future insurance costs of the moving body, the tax, and the like may be presented as the additional information, similarly to the information for the business.

According to a presentation method (a presentation pattern) of the estimate result, to the owner of the moving body, the repair-purchase business can present, for example, the "vehicle purchase cost (the second purchase cost)" among the two patterns of purchase costs, and can present to buy the vehicle for 500,000 yen when purchasing it as a component group.

In addition, the repair-purchase business can also present to the owner of the moving body that the vehicle is purchased for 600,000 yen by adding 100,000 yen to the "vehicle purchase cost (the second purchase cost)" with reference to the related information (the market price information) of "others". That is, the repair-purchase business can determine the purchase cost by placing importance on the profit or the market price information. Further, the repair-purchase business can propose the repair cost.

### <<Presentation of Model Information>>

The model generation unit 22 generates the 3D model and the 2D model related to the moving body based on the type of the moving body specified by the type specifying unit 16.

Specifically, the model generation unit 22 generates the 3D model and the 2D model, and the information presentation unit 21 outputs the 3D three-dimensional view and the 2D developed view of the damaged moving body through the VIEWER screens illustrated in FIGS. 10 and 11.

Further, the model generation unit 22 specifies the location of the damaged component in the 3D model and the 2D model based on the "damage information of a component" specified by the damage specifying unit 18. Then, the information presentation unit 21 outputs the location of the damaged component in the 3D three-dimensional view and the 2D developed view in different display modes.

It can be seen from FIGS. 10 and 11 that the location of the damaged component (the damaged portion) is highlighted.

Information on the 3D model and the 2D model includes information on a disassembly model obtained by disassembling the moving body into a component group and the information on a damaged portion. The information on a damaged portion includes information on the size, a shape, and a depth of the scratch for each component in addition to the type of the component.

With reference to the information on a disassembly model and the information on a damaged portion, the screen display unit 14 can switch from the "3D three-dimensional view" illustrated in FIG. 10 to a "component exploded view" disassembled into the component group and display information on a damaged component for each component.

As described above, by using the VIEWER screens illustrated in FIGS. 10 and 11, the repair-purchase business can visually understand the structure of the moving body and specify a repair location when repairing or replacing the damaged moving body.

### <<Presentation of Cost Simulation>>

The purchase cost calculation unit 20 calculates the "purchase cost" of the moving body based on the reuse value of the moving body and the repair cost of the moving body with reference to the "market price information of the moving body", and also calculates the future "predicted purchase cost" of the moving body.

At this time, the purchase cost calculation unit 20 can calculate the "predicted purchase cost" with a higher accuracy by referring to the "future expenditure information (the tax, the vehicle inspection cost) of the moving body" stored in the moving body information storage unit 11 in addition to the "reuse value of the moving body" and the "repair information".

The transition graph generation unit 23 generates the "cost simulation information" including the "purchase cost", the "predicted purchase cost", "time-series transition of the predicted purchase cost", and the "repair cost". Then, as illustrated in FIGS. 12 and 13, the information presentation unit 21 presents the "cost simulation information" as the moving body-related information.

Specifically, the information presentation unit 21 presents the "cost transition graph" required for handling the damaged moving body through the cost transition graph screens illustrated in FIGS. 12 and 13.

In FIG. 12, current time and future "cost transition graphs" of the moving body when the damaged moving body is estimated with the similarity of 100% are displayed.

A vertical axis of the "cost transition graph" indicates the cost, and a horizontal axis indicates elapsed years. In the cost transition graph, a bar graph indicates the current "repair cost", and a line graph indicates the "current purchase cost" and the "future predicted purchase cost".

Specifically, the transition graph generation unit 23 generates the "cost transition graph" in consideration of "information on a tax" required to maintain the moving body and "information on a vehicle inspection cost" required to inspect the moving body. That is, the transition graph generation unit 23 can generate a "cost transition graph" in consideration of, for example, payment information of the tax once a year and payment information of the vehicle inspection cost once two years (several years).

As illustrated in FIG. 12, the information presentation unit 21 presents the "cost transition graph" generated by the transition graph generation unit 23 on the display screen. At this time, in order to make it easy to intuitively understand a timing of the tax payment and a timing of payment of the vehicle inspection cost, the information presentation unit 21 can present the information on a tax (an amount and the timing of the tax) and the information on a vehicle inspection cost (an amount and the timing of the tax) on the "cost transition graph" so as to be identified by a predetermined identification mark.

It can be seen from FIG. 12 that the type of the damaged moving body is identified with the accuracy of 100% (estimated with the similarity of 100%), the repair cost is 300,000 yen, and the current time purchase cost is 500,000 yen. In addition, the predicted purchase cost after three years is 160,000 yen, which means that tax payment for two years and one vehicle inspection cost are incurred. In addition, it can be seen that the predicted purchase cost of the moving body gradually decreases with the passage of years, and the reuse value of the moving body decreases.

Although only one pattern of the repair cost, the purchase cost, and the predicted purchase cost is displayed in the "cost transition graph" illustrated in FIG. 12 for convenience of description, a plurality of patterns of the repair cost, the purchase cost, and the predicted purchase cost may be displayed. Alternatively, the cost transition graphs may be divided into a plurality of tabs, and the respective cost transition graphs may be switched and displayed by switching the tabs.

Subsequently, in FIG. 13, current time and future "cost transition graphs" of the moving body when the damaged moving body is estimated with the similarity of 80% are displayed.

When the type of the moving body cannot be identified, the purchase cost calculation unit 20 calculates the "purchase cost" and the "predicted purchase cost" of the moving body by varying them according to the similarity of the type. Similarly, the repair cost calculation unit 19 calculates the "repair cost" of the moving body by varying the "repair cost" according to the similarity of the type.

In FIG. 13, since the moving body is estimated with the similarity of 80%, information on an error (error bar) corresponding to the difference 20% is displayed in the cost transition graph.

Specifically, the transition graph generation unit 23 generates the "cost transition graph" including the "purchase cost", the "predicted purchase cost", the "time-series transition of the predicted purchase cost", and the "repair cost" in consideration of the "similarity of type".

Specifically, as illustrated in FIG. 13, the transition graph generation unit 23 generates the "cost transition graph" so as to set an upper limit value and a lower limit value of each of the "purchase cost", the "predicted purchase cost", and the "repair cost" according to the similarity (for example, 80%) of the type.

Then, the information presentation unit 21 presents the "cost transition graph" generated by the transition graph generation unit 23 on the display screen. At this time, the information presentation unit 21 presents the "purchase cost", the "predicted purchase cost", and the "repair cost" corresponding to the similarity of the type (for example, 80%) on the display screen so that error bars indicating the upper limit values and the lower limit values thereof are superimposed. As illustrated in FIG. 13, the information presentation unit 21 may present a upper limit line and a lower limit line of the "time-series transition (the line graph) of the predicted purchase cost" in a superimposed manner.

By doing so, when the similarity of the type is not 100% (when the similarity is 1% to 99%), each of the first user and the second user can intuitively understand the estimated amounts of the "purchase cost", the "predicted purchase cost", and the "repair cost".

It can be seen from FIG. 13 that the type of the damaged moving body is estimated with the similarity of 80%, the repair cost is 250,000 to 350,000 yen, and the current time purchase cost is 450,000 to 550,000 yen. In addition, the predicted purchase cost after three years is 120,000 to 200,000 yen, which means that tax payment for two years and one vehicle inspection cost are incurred.

As described above, by using the cost transition graph screens illustrated in FIGS. 12 and 13, the first user (the business) or the second user (the owner) can compare the "repair cost", a "price cost", and the "future predicted purchase cost", simulate various costs, and determine a suitable handling method for the damaged moving body.

### <<Display of Estimate Preparation Screen>>

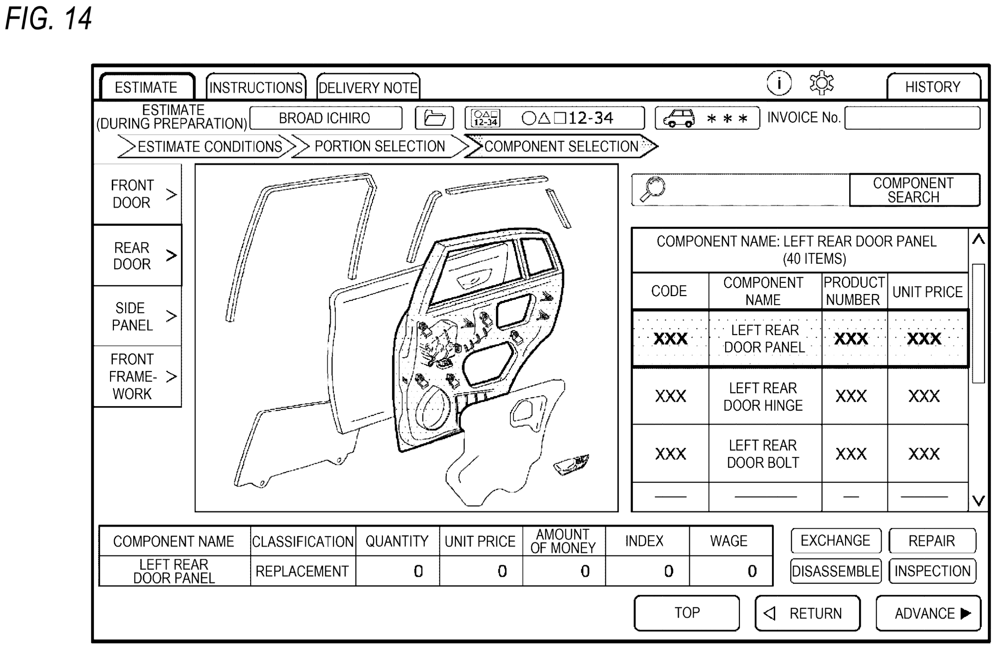

Next, estimate preparation screens illustrated in FIGS. 14 and 15 will be described. FIGS. 14 and 15 are diagrams illustrating display screens presented to the first user terminal 100 for a business (the first user).

FIG. 14 illustrates the display screen (the component selection screen) after screen transition from the component analysis screen (the analysis result) illustrated in FIG. 8, for example, by a user operation by a business.

FIG. 15 illustrates the display screen (the work selection screen) after screen transition from the screen illustrated in FIG. 14 after component selection is performed by the user operation in FIG. 14.

These screens and screen transition processing are not presented to the second user terminal 200 for the owner (the second user) of the moving body.

The estimate preparation screens illustrated in FIGS. 14 and 15 are presentation contents used when the business wants to prepare an estimate having a more accuracy after the business presents the handling information (the estimate result) illustrated in FIG. 8 through the first user terminal 100. Alternatively, the estimate preparation screens illustrated in FIGS. 14 and 15 are presentation contents used when the business wants to correct the estimate result illustrated in FIG. 8.

Specifically, the information presentation unit 21 makes a screen transition when an "estimate preparation" execution button (not illustrated) displayed on a predetermined display screen (the component analysis screen illustrated in FIG. 8) is pressed by the user operation, and presents the estimate preparation screens illustrated in FIGS. 14 and 15.

On the component selection screen illustrated in FIG. 14, the necessary component presentation unit 24 presents a portion (the component group) required for repair and replacement of the damaged moving body together with an illustration (3D exploded view). Then, the necessary component presentation unit 24 receives the selection of the component by the user operation, and presents the component code, the classification, the component name, the component number, the component unit price, and the like of the received component group.

The necessary component presentation unit 24 presents the component group in the damaged portion (for example, a left rear door) together with the illustration. Therefore, the business can visually understand the damaged component at the damaged portion. In addition, the business can understand the details of the skeleton of the damaged portion and an inner component.

The necessary component presentation unit 24 may present only the damaged component group, or may present only the damaged component in a different display mode (highlight) after presenting the damaged component group and peripheral components.

The necessary work presentation unit 25 presents works required for the repair and replacement of the damaged moving body on the work selection screen illustrated in FIG. 15. Then, the necessary work presentation unit 25 receives selection of the work content by the user operation, and presents a work condition, the index, the wage, a material cost, and the like of the received work content.

As described above, the information presentation device 1 can present necessary components and the work contents, determine the necessary components and the work contents according to a determination operation by the user, and present the estimate result (the repair cost). By doing so, the business can correct and adjust the estimate result presented by the information presentation device 1 and propose the estimate result to the owner of the moving body.

With the information presentation device 1, it is possible to present an appropriate handling method for a damaged moving body to the user. In addition, it is possible to present the moving body-related information including the estimate of the "repair cost" and the estimate of the "purchase cost" based on the repair cost to the user, and determine the appropriate handling method for the moving body.

Note that the information presentation device 1 can exchange information with both the first user terminal 100 and the second user terminal 200, first present the "moving body-related information" to the first user terminal 100, and present the "moving body-related information" corrected (adjusted) by the first user terminal 100 to the second user terminal 200.

Alternatively, the information presentation device 1 can directly exchange information with the second user terminal 200 and directly present the "moving body-related information" to the second user terminal 200.

### <Information Presentation Method>

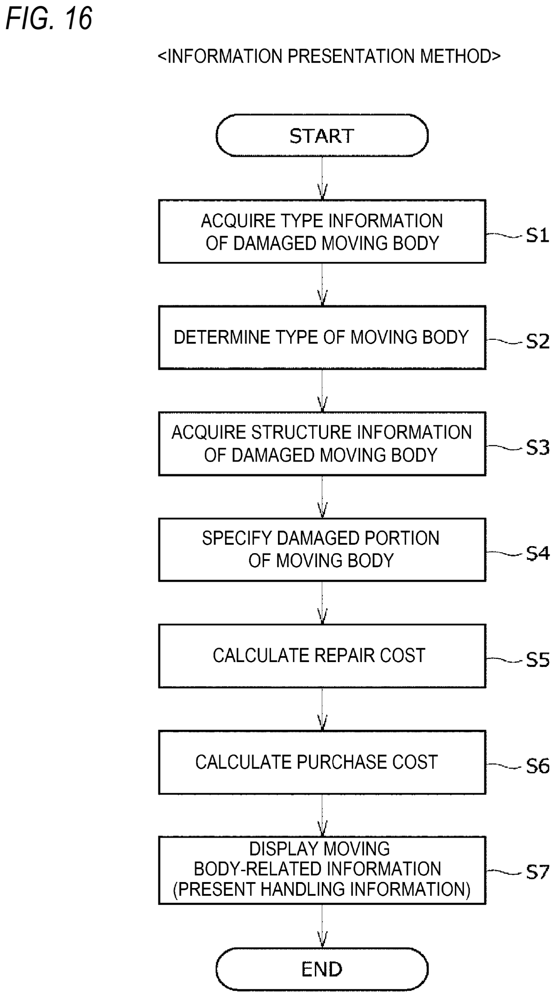

Next, processing of the information presentation program (the information presentation method) executed by the information presentation system S will be described with reference to FIG. 16.

The program according to the present embodiment is a program for realizing the repair information storage unit 13, the screen display unit 14, the type identification unit 15, the type specifying unit 16, the structure information acquisition unit 17, the damage specifying unit 18, the repair cost calculation unit 19, the purchase cost calculation unit 20, the information presentation unit 21, the model generation unit 22, the transition graph generation unit 23, the necessary component presentation unit 24, and the necessary work presentation unit 25 as functional components of the information presentation device 1 including the storage unit 10, the moving body information storage unit 11, and the component information storage unit 12, and the CPU (processor) of the information presentation device 1 executes the information presentation program.

The program is executed upon receipt of an operation instruction from a user.

In a processing flow of the "information presentation method" illustrated in FIG. 16, first, processing is started when an image obtained by capturing the moving body is input. The moving body captured in this image include damaged moving body as well as a moving body which is undamaged (undamaged moving body).

When the input of the image is received, the processing starts from step S1 in which the type identification unit 15 acquires the type information of the damaged moving body.

Specifically, the type identification unit 15 acquires the "vehicle inspection certificate information (the first type information)" from the first user terminal 100 or the second user terminal 200 through the vehicle inspection certificate information input screen illustrated in FIG. 4. Alternatively, the type identification unit 15 acquires the "vehicle registration number (the first type information)" through the vehicle registration number input screen illustrated in FIG. 5.

When the first type information is not obtained, the type identification unit 15 can acquire the second type information such as the vehicle type, the vehicle name, and the vehicle body shape through a type information acquisition screen (not illustrated).

Then, in step S2, the type identification unit 15 identifies the type of the moving body based on the "type information" and the "moving body information" of the moving body managed by the moving body information storage unit 11. When the type identification unit 15 acquires the "first type information" and identifies the type of the moving body, the type specifying unit 16 specifies the type of the moving body with the similarity of 100% based on the identification result.

On the other hand, when the "second type information" is obtained instead of the "first type information", the type identification unit 15 estimates the type of the moving body based on the "second type information" and the "moving body information". Then, the type specifying unit 16 specifies the estimated type of the moving body and the "similarity" of the moving body.

Then, in step S3, the structure information acquisition unit 17 acquires the structure information (the damage image data) of the moving body measured using the depth sensor.

Specifically, the structure information acquisition unit 17 acquires the "damage image data" of the moving body captured by the imaging device 201 from the first user terminal 100 or the second user terminal 200.

Then, in step S4, the damage specifying unit 18 specifies the "damage information of a component" constituting the moving body based on the "structure information" and the "component information" stored by the component information storage unit 12.

Specifically, based on the "structure information (the damage image data)" and the "component information", the damage specifying unit 18 compares the component of the damaged moving body with a normal component corresponding to the damaged component, and specifies the "damage information of a component".

Then, in step S5, the repair cost calculation unit 19 calculates the "repair cost" required for repairing the component of the moving body based on the "damage information of a component" and the "repair information" stored in the repair information storage unit 13.

Then, in step S6, the purchase cost calculation unit 20 calculates the "first purchase cost" related to the purchase of the moving body based on the repair cost of the moving body and the "second purchase cost" related to the purchase of the moving body based on the reuse value of the component of the moving body.

Specifically, the purchase cost calculation unit 20 calculates the "first purchase cost" based on the "reuse value of the moving body" and the "repair cost" of the moving body with reference to the "market price information (market price) of the moving body". In addition, the purchase cost calculation unit 20 calculates the "second purchase cost" based on the "reuse value of the component" and the "scrapping cost of the moving body" with reference to the "market price information (market price) of the component".

Then, in step S7, the information presentation unit 21 presents the moving body-related information to the first user terminal 100 or the second user terminal 200.

Specifically, the information presentation unit 21 presents the "handling information" of the damaged moving body through the component analysis screen (the analysis result) illustrated in FIGS. 7 and 8. The "handling information" includes the "vehicle information", the "repair cost", the "purchase cost", the "scrapping cost", the "cost related to other processing", and a "repair-replacement component list" for the damaged moving body.

In addition, the information presentation unit 21 outputs the 3D model (the 3D three-dimensional view) and the 2D model (the 2D developed view) of the damaged moving body through the VIEWER screens illustrated in FIGS. 10 and 11.

Further, the information presentation unit 21 presents the "cost simulation information (the cost transition graph)" required for handling the damaged moving body through the cost transition graph screens illustrated in FIGS. 12 and 13.

The "cost simulation information" includes the "purchase cost", the "predicted purchase cost", the "time-series transition of the predicted purchase cost", and the "repair cost".

After steps S1 to S7, a process of FIG. 16 ends.

According to the information presentation method, it is possible to present the moving body-related information including the estimate of the "repair cost" and the estimate of the "purchase cost" in consideration of the repair cost to the user, and to determine an appropriate handling method for the damaged moving body.

The order of steps of steps S1 and S2 and steps S3 and S4 may be reversed.

### <Other Embodiments>

In the above embodiment, an example in which the information presentation unit 21 presents the "moving body-related information" to the first user terminal 100 or the second user terminal 200 has been described, but the details of the moving body-related information are not particularly limited.

That is, the "moving body-related information" according to the present embodiment includes the "handling information (the repair cost, the purchase cost)", the "model information", and the "cost simulation information", but the "moving body-related information" is not limited to these pieces of information.

For example, the "moving body-related information" may include other related information for the damaged moving body. Alternatively, the "moving body-related information" may include only the "handling information (the repair cost, the purchase cost)".

In the above embodiment, the information presentation program is stored in a recording medium readable by the information presentation device 1, and the information presentation device 1 reads and executes the program to execute processing. Here, the recording medium (a non-transitory recording medium) that can be read by the information presentation device 1 refers to a magnetic disk, a magneto-optical disk, a CD-ROM, a DVD-ROM, a semiconductor memory, or the like.

In addition, dedicated software may be activated using a terminal (the mobile terminal) serving as the information presentation device 1, and the information presentation program may be executed on a web browser.

In the above embodiment, the information presentation device, a component information management method, and a component information management program according to the present invention have been mainly described.

The above embodiment is merely an example for facilitating the understanding of the present invention, and does not limit the present invention. It is needless to say that the present invention can be changed or modified without departing from a scope of the present invention, and includes the equivalents thereof.

The present application is based on a Japanese Patent Application No. 2022-212577 filed on December 28, 2022, the contents of which are incorporated herein by reference.

## Claims

1. An information presentation device comprising:
a component information storage unit configured to store component information related to a component constituting a moving body;
a repair information storage unit configured to store repair information related to repair of the component;
a structure information acquisition unit configured to acquire structure information of a predetermined moving body;
a damage specifying unit configured to specify damage information of the component constituting the moving body based on the structure information and the component information of the component constituting the moving body stored by the component information storage unit;
a repair cost calculation unit configured to calculate a repair cost required for repairing the component constituting the moving body based on the damage information of the component specified by the damage specifying unit and the repair information stored by the repair information storage unit;
a purchase cost calculation unit configured to calculate a purchase cost required for purchase of the moving body;
an information presentation unit configured to present moving body-related information including the repair cost calculated by the repair cost calculation unit and the purchase cost calculated by the purchase cost calculation unit, wherein
the purchase cost calculation unit calculates a first purchase cost related to purchase of the moving body based on the repair cost and a second purchase cost related to the purchase of the moving body based on a reuse value of the component constituting the moving body, and
the information presentation unit presents the moving body-related information including the purchase cost of the moving body in consideration of calculation results of the first purchase cost and the second purchase cost and the repair cost.

2. The information presentation device according to claim 1, further comprising
a moving body information storage unit configured to store moving body information related to the moving body and market price information of the moving body, wherein
the component information storage unit stores the component information related to the component constituting the moving body and market price information of the component constituting the moving body,
the purchase cost calculation unit
calculates the first purchase cost based on the reuse value of the moving body and the repair cost of the moving body with reference to the market price information of the moving body stored by the moving body information storage unit, and
calculates the second purchase cost based on the reuse value of the component constituting the moving body and the scrapping cost of the moving body with reference to the market price information of the component stored by the component information storage unit.

3. The information presentation device according to claim 1 or 2, further comprising:
a moving body information storage unit configured to store moving body information related to the moving body;
a type identification unit configured to identify a type of the moving body based on type information of the moving body and the moving body information of the moving body stored by the moving body information storage unit; and
a type specifying unit configured to specify the type of the moving body when the type of the moving body is capable of being identified by the type identification unit, and specify the type of the moving body estimated from the type information and the moving body information and a similarity of the type when the type of the moving body is not capable of being identified, wherein
the purchase cost calculation unit varies the purchase cost of the moving body according to the similarity of the type when the type of the moving body is not capable of being identified.

4. The information presentation device according to claim 3, wherein
the moving body is a damaged vehicle,
the type information includes first type information including vehicle inspection certificate information for identifying the type of the moving body and a vehicle registration number, and second type information including information on the vehicle type for estimating the type of the moving body, information on a vehicle body shape, and information on a vehicle category, and
the type specifying unit
specifies the type of the moving body when the type identification unit acquires the first type information, and
specifies the type of the moving body and the similarity of the type based on an identification degree of the second type information when the type identification unit acquires the second type information.

5. An information presentation method executed by a computer including a component information storage unit configured to store component information related to a component constituting a moving body, and a repair information storage unit configured to store repair information related to repair of the component, the information presentation method comprising:
a damage specifying step of specifying damage information of the component constituting the moving body based on structure information of a predetermined moving body and the component information of the component constituting the moving body stored by the component information storage unit;
a repair cost calculation step of calculating a repair cost required for repairing the component constituting the moving body based on the damage information of the component and the repair information stored by the repair information storage unit;
a purchase cost calculation step of calculating a purchase cost required for purchase of the moving body; and
an information presentation step of presenting moving body-related information including the repair cost and the purchase cost, wherein
in the purchase cost calculation step, a first purchase cost related to purchase of the moving body based on the repair cost and a second purchase cost related to the purchase of the moving body based on a reuse value of the component constituting the moving body are calculated, and
in the information presentation step, the moving body-related information including the purchase cost of the moving body in consideration of calculation results of the first purchase cost and the second purchase cost and the repair cost is presented.

6. An information presentation program causing a computer as an information presentation device including a component information storage unit configured to store component information related to a component constituting a moving body, and a repair information storage unit configured to store repair information related to repair of the component to execute the following processing:
damage specifying processing of specifying damage information of the component constituting the moving body based on structure information of a predetermined moving body and the component information of the component constituting the moving body stored by the component information storage unit;
repair cost calculation processing of calculating a repair cost required for repairing the component constituting the moving body based on the damage information of the component and the repair information stored by the repair information storage unit;
purchase cost calculation processing of calculating a purchase cost required for purchase of the moving body; and
information presentation processing of presenting moving body-related information including the repair cost and the purchase cost, wherein
in the purchase cost calculation processing, a first purchase cost related to purchase of the moving body based on the repair cost and a second purchase cost related to the purchase of the moving body based on a reuse value of the component constituting the moving body are calculated, and
in the information presentation processing, the moving body-related information including the purchase cost of the moving body in consideration of calculation results of the first purchase cost and the second purchase cost and the repair cost is presented.
